# EUROPÄISCHE PATENTANMELDUNG

(11) **EP 1 071 265 A2**
(43) Veröffentlichungstag der Anmeldung: **24.01.2001**
(21) Anmeldenummer: 00113981.5
(22) Anmeldetag: 01.07.2000
(51) Int. Cl.: H04M 3/42

(54) **Verfahren und Zentrale zur Behandlung eines eingehenden Rufes**

(30) Priorität: 21.07.1999 DE 19934108
(71) Anmelder: Tenovis GmbH & Co. KG, 60362 Frankfurt (DE)
(72) Erfinder: Steuer, Manfred, 65719 Hofheim (DE)
(74) Vertreter: Friedmann, Jürgen, Dr.-Ing.

(57) **Zusammenfassung**

Es wird ein Verfahren und eine Zentrale (10) zur Behandlung eines bei einem Kommunikationsnetz (6) eingehenden Rufes vorgeschlagen, daß einer flexiblen Bedienung des eingehenden Rufes dient. Dabei werden einer Rufnummer (100) in einer Adressenzuordnungsdatei (11) Adressen (140,...) von Endgeräten (40 - 47) in Abhängigkeit der Betriebsbereitschaft von Endgeräten dynamisch zugeordnet.

## Beschreibung

### Stand der Technik

Die Erfindung geht aus von einem Verfahren zur Behandlung eines bei einem Kommunikationsnetz eingehenden Rufes nach der Gattung des Hauptanspruchs und von einer Zentrale nach der Gattung des nebengeordneten Vorrichtungsanspruchs. Es sind generell Verfahren zur Rufweiterleitung oder zur Rufumleitung bekannt, bei denen beispielsweise eine Rufumleitung an einem drahtgebundenen Telekommunikationsendgerät durch manuelle Eingabe eines Benutzers eingerichtet werden kann, so daß beispielsweise ein mobiles Endgerät als Zieladresse festgelegt wird. Dabei ist eine Rücknahme der Rufumleitung notwendig, wenn sich der Benutzer wieder im Bereich des drahtgebundenen Telekommunikationsendgerätes aufhält beziehungsweise dort erreichbar ist.

### Vorteile der Erfindung

Das erfindungsgemäße Verfahren mit den Merkmalen des Hauptanspruchs hat demgegenüber den Vorteil, daß der Benutzer von mehreren Telekommunikationsendgeräten, wie beispielsweise drahtgebundene Terminals und mobile Endgeräte, zum einen ständig unter seiner persönlichen Rufnummer erreichbar ist und daß andererseits die Rufumleitung bzw. die Rufweiterleitung zu dem aktuell in Gebrauch befindlichen Endgerät automatisch von einem Telekommunikationsnetz verwaltet und der Benutzer somit entlastet wird.

Weiterhin ist von Vorteil, daß zum Erreichen des Benutzers von außerhalb des Kommunikationsnetzes, beispielsweise über ein öffentliches Telekommunikationsnetz, lediglich eine einzige Rufnummer notwendig ist. Ein im Telekommunikationsnetz des Benutzers eingehender Ruf, der an die Rufnummer des Benutzers gerichtet ist, wird dabei automatisch dem richtigen Endgerät zugeleitet.

Weiterhin ist von Vorteil, daß der Benutzer individuell festlegen kann, wie ein an seine Rufnummer gerichteter Ruf behandelt werden soll, indem der eingehende Ruf den der Rufnummer zugeordneten Adressen nach einer vorgegebenen Abfolge zugeleitet wird.

Weiterhin ist von Vorteil, daß das erfindungsgemäße Verfahren in Corporate Networks möglich ist und damit der teure Einsatz von Handys, insbesondere zum Betrieb in öffentlichen Netzen, entfällt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß die Abfolge vorsieht, daß der eingehende Ruf mittels den der Gruppe von Endgeräten zugeordneten Adressen alternativ folgendermaßen behandelt wird.
- durch eine Signalisierung zunächst am ersten Endgerät und anschließend am zweiten Endgerät,
- durch eine Signalisierung zunächst am zweiten Endgerät und anschließend am ersten Endgerät,
- durch eine Signalisierung zunächst am ersten Endgerät, anschließend am zweiten Endgerät und schließlich wieder am ersten Endgerät.

Dadurch wird ermöglicht, daß die Behandlung des eingehenden Rufes zum einen sehr individuell gemäß den Wünschen des Benutzers geschieht und andererseits die Verwaltung der Rufumleitungen und Rufweiterleitungen vollständig durch das Kommunikationsnetz durchgeführt wird.

Weiterhin ist es von Vorteil, daß das zweite Endgerät ein mobiles Endgerät ist, daß das Kommunikationsnetz wenigstens eine Basisstation zum Betrieb von mobilen Endgeräten umfaßt und daß die Betriebsbereitschaft des mobilen Endgerätes dann gegeben ist, wenn das mobile Endgerät bei einer Basisstation des Kommunikationsnetzes eingeloggt wird. Durch das Einloggen des mobilen Endgerätes an der Basisstation ist das mobile Endgerät erreichbar und es ist somit sinnvoll, daß ein eingehender Ruf an den dem mobilen Endgerät zugeordneten Benutzer auch am mobilen Endgerät signalisiert wird. Weiterhin ist es von Vorteil, daß bei einem Wechsel der Basisstation, das heißt, wenn das mobile Endgerät vom Einzugsbereich einer ersten Basisstation in den Einzugsbereich einer zweiten Basisstation gebracht wird, das Telekommunikationssystem einen solchen Wechsel erkennt und einen eingehenden Ruf an das mobile Endgerät an die jeweils aktuelle Basisstation weiterleitet.

Weiterhin ist es von Vorteil, daß der Rufnummer die Adresse eines dritten Endgerätes aus der Gruppe von Endgeräten zugeordnet wird und daß die Signalisierung zunächst am ersten Endgerät, anschließend am zweiten Endgerät und schließlich am dritten Endgerät durchgeführt wird. Dadurch wird das dritte Endgerät sozusagen als 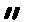 Default-Endgerät" eingerichtet, was den Vorteil hat, daß der eingehende Ruf entgegengenommen werden kann, selbst wenn das erste Endgerät und das zweite Endgerät den Ruf nicht entgegennehmen können. Beispielsweise ist dies der Fall, wenn sich der Benutzer nicht im Bereich des drahtgebundenen ersten Terminals aufhält und wenn zum anderen das mobile Terminal nur vermeintlich aktiviert ist, weil, zum Beispiel, die Akkus leer sind.

Die erfindungsgemäße Zentrale für ein Kommunikationsnetz mit den Merkmalen des nebengeordneten Vorrichtungsanspruchs hat gegenüber dem Stand der Technik den Vorteil, daß mittels der Adressenzuordnungstabelle eine dynamische und damit flexible Zuordnung der Adressen einer Gruppe von Endgeräten zu der Rufnummer eines Teilnehmers oder auch einer Gruppe von Teilnehmern, durchgeführt wird, wodurch die Behandlung des eingehenden Rufes situationsgerecht, insbesondere in Abhängigkeit der Betriebsbereitschaft des zweiten Endgerätes, durchgeführt werden kann.

Die Rufumleitung erfolgt somit automatisch und ankommende Rufe können optimal bedient werden. Fehler durch Vergessen der Umschaltung oder durch Vergessen deren Rücknahme kommen somit nicht vor.

Weiterhin ist von Vorteil, daß die erfindungsgemäße Zentrale in Corporate Networks eingesetzt werden kann und damit der teure Einsatz von Handys, insbesondere zum Betrieb in öffentlichen Netzen, entfällt.

Durch die in den Unteransprüchen aufgeführten Maßnahmen sind vorteilhafte Weiterbildungen und Verbesserungen der im nebengeordneten Vorrichtungsanspruch angegebenen Zentrale möglich.

Besonders vorteilhaft ist, daß das zweite Endgerät ein mobiles Endgerät ist, daß das Kommunikationsnetz wenigstens eine Basisstation zum Betrieb von mobilen Endgeräten umfaßt und das die Zentrale Mittel umfaßt, die Betriebsbereitschaft des mobilen Endgerätes, insbesondere durch Einloggen des mobilen Endgerätes bei einer Basisstation, zu erkennen und die Adresse des mobilen Endgerätes der Rufnummer in der Adressenzuordnungstabelle zuzuordnen. Dadurch kann mit dein Einschalten des mobilen Endgerätes durch den Benutzer und mit dem Einloggvorgang des mobilen Endgerätes an der Basisstation beispielsweise automatisch die Zuleitung eines eingehenden Rufes von der Andresse des zugeordneten drahtgebundenen Terminals mittels Rufumleitung umgeschaltet werden auf die Adresse des mobilen Endgerätes. Alternativ dazu ist es möglich, daß eine Rufweiterleitung nach einer gewissen Zeit oder einer gewissen Anzahl von Rufen erfolgt, mit dem Vorteil, daß der Teilnehmer, wenn er sich am Platz seines drahtgebundenen Terminals befindet, den eingehenden Ruf auch mit dem drahtgebundenen Terminal annehmen kann.

Weiterhin ist von Vorteil, daß mittels der Adressenzuordnnungstabelle der Rufnummer die Adresse eines dritten Endgerätes aus der Gruppe aus Endgeräten zugeordnet wird. Dadurch kann der eingehende Ruf in jedem Fall bedient werden, auch wenn der Benutzer beispielsweise nicht im Bereich des ersten Endgerätes, insbesondere ein drahtgebundenes Endgerät, erreichbar ist und weiterhin das zweite Endgerät, insbesondere ein mobiles Endgerät, seine Betriebsbereitschaft zwar signalisiert jedoch außerstande ist, den eingehenden Ruf anzunehmen, weil beispielsweise die Akkus leer sind.

### Zeichnung

Ein Ausführungsbeispiel der Erfindung ist in der Zeichnung dargestellt und in der nachfolgenden Beschreibung näher erläutert.

Es zeigen
Figur 1 ein Kommunikationsnetzwerk mit Basisstationen, mit Endgeräten und mit einer Zentrale und
Figur 2 eine Adressenzuordnungstabelle mit einem Belegungsbeispiel

### Beschreibung des Ausführungsbeispiels

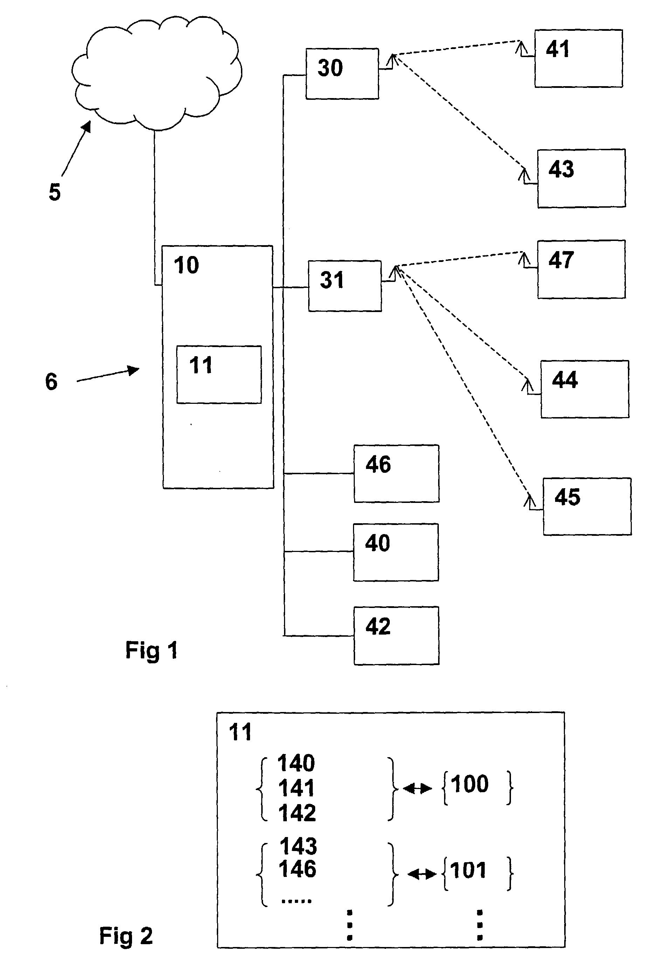

In Figur 1 ist ein Kommunikationsnetz 6 dargestellt, das eine Zentrale 10, eine erste Basisstation 30, eine zweite Basisstation 31 und acht Telekommunikationsendgeräte 40 - 47 umfaßt. Die Zentrale 10 des Kommunikationsnetzwerkes ist mit einem weiteren Kommunikationsnetz 5 verbunden. Das weitere Kommunikationsnetz 5 ist insbesondere das öffentliche Telekommunikationsnetz an das das erfindungsgemäße Telekommunikationsnetz 6 angeschlossen ist. Die Zentrale 10 umfaßt eine Adressenzuordnungstabelle 11 und ist zum einen mit den Basisstationen 30, 31 und mit dem ersten, dritten und siebten Telekommunikationsendgerät 40, 42, 46 verbunden. Das erste, dritte und siebte Telekommunikationsendgerät 40, 42, 46 ist im Ausführungsbeispiel drahtgebunden ausgeführt und wird im folgenden auch als drahtgebundenes Terminal 40, 42, 46 bezeichnet. Das zweite und vierte Telekommunikationsendgerät 41, 43 ist im Ausführungsbeispiel mittels einer Funkschnittstelle an die erste Basisstation 30 angeschlossen. Das fünfte, sechste und achte Endgerät 44, 45, 47 ist mit einer Funkschnittstelle an die zweite Basisstation 31 angeschlossen. Selbstverständlich stehen die Telekommunikationsendgeräte 40 - 47 und die Basisstationen 30, 31 für eine Vielzahl von Telekommunikationsendgeräten und Basisstationen, die an die Zentrale 10 angeschlossen werden können, beispielsweise im Rahmen eines Corporate Networks. Dabei ist es auch möglich, daß die Zentrale 10 verteilt vorgesehen ist und beispielsweise an verschiedenen Standorten des Corporate Networks lokalisiert ist. In diesem Fall verteilt sich das Corporate Network auf verschiedene Standorte beispielsweise eines Unternehmens. An jedem Standort ist ein Teil der Zentrale 10 realisiert, der für die am Standort befindlichen Terminals zuständig ist. Es ist jedoch keine besondere Netzstruktur des Kommunikationsnetzes 6 erforderlich, wie beispielsweise die Struktur eines Intelligenten Netzes. Im Ausführungsbeispiel ist die Zentrale 10 als ein einziger Block dargestellt, der eine Adressenzuordnungstabelle 11 umfaßt. Wenn die Zentrale 10 verteilt ausgeführt ist, beispielsweise ein erstes Ziel der Zentrale 10 befindet sich an einem ersten Standort des Coorporate Network und ein zweiter Teil der Zentrale 10 befindet sich an einem zweiten Standort des Cooporate Networks, dann ist die Darstellung der Zentrale 10 als ein integrierter Block durchaus zutreffend, weil beide Teile der Zentrale gemeinsam so funktionieren, als sei die Zentrale nicht verteilt. Das wird beispielsweise so realisiert, daß die Zentrale eines bestimmten Standorts die zentrale Verwaltung auch für die anderen Standorte durchführt.

In Figur 2 ist die Adressenzuordnungstabelle 11 dargestellt, die insbesondere mit Hilfe eines nicht dargestellten Speichers, beispielsweise ein Schreib-Lese-Speicher, in der Zentrale 10 abgelegt ist. Selbstverständlich kann sich die Adressenzuordnungstabelle 11 auch in einer nicht dargestellten und an die Zentrale 10 angeschlossenen Datenverarbeitungsanlage befinden. Wichtig ist, daß die Zentrale 10 Zugriff auf die Adressenzuordnungstabelle 11 hat und diese gegebenenfalls verändern kann. Die Funktionsweise der Verwendung der Adressenzuordnungstabelle 11 wird im folgenden anhand eines Beispiels erläutert. In der Adressenzuordnungstabelle 11 wird eine Zuordnung einer Rufnummer 100 zu einer Gruppe von drei Adressen 140, 141, 142 durchgeführt. Jedem der Endgeräte 40 - 47 entspricht eine Adresse 140,... . Im Ausführungsbeispiel ist dem ersten Endgerät 40 die erste Adresse 140, dem zweiten Endgerät 41 die zweite Adresse 141 und dem dritten Endgerät 42 die dritte Adresse 142 zugeordnet. Im Ausführungsbeispiel bilden die ersten drei Endgeräte 40 - 42 eine Gruppe von Endgeräten, die der Rufnummer 100 zugeordnet werden. In Figur 2 ist angedeutet, daß einer weiteren Rufnummer 101 beispielsweise eine vierte Adresse 143 und eine siebte Adresse 146 zugeordnet ist. Die vierte Adresse 143 und die siebte Adresse 146 entsprechen hierbei beispielsweise dem vierten und siebten Endgerät 43, 46. Die Rufnummern 100, 101 dienen als Beispiele für eine Vielzahl von Rufnummern von Teilnehmern, die in dem erfindungsgemäßen Telekommunikationsnetz 6 erreicht werden können.

Das erfindungsgemäße Verfahren und die erfindungsgemäße Zentrale funktionieren bei einem eingehenden Ruf gemäß der nachfolgenden Beschreibung. Es wird dabei unterstellt, daß ein eingehender Ruf an die Rufnummer 100 gerichtet ist. Es sei angenommen, daß ein der Rufnummer 100 zugeordneter Benutzer über das erste Telekommunikationsendgerät 40, das zweite Telekommunikationsendgerät 41 und das dritte Telekommunikationsendgerät 42 zumindest potentiell erreichbar ist. Das erste Telekommunikationsendgerät 40 und das dritte Telekommunikationsendgerät 42 sind im Ausführungsbeispiel als drahtgebundene Terminals mittels einer Drahtschnittstelle an die Zentrale 10 angeschlossen. Das zweite Telekommunikationsendgerät 41 ist im Ausführungsbeispiel als mobiles Endgerät ausgeführt, das an der ersten Basisstation 30 eingeloggt ist. Entsprechend diesem Ausführungsbeispiel ist in der Adressenzuordnungstabelle 11 eine Zuordnung abgespeichert, die der Rufnummer 100 die den Endgeräten 40, 41, 42 entsprechenden Adressen, das heißt die erste, zweite und dritte Adresse 140 bis 142, zuordnet. Wenn ein Ruf an die Rufnummer 100 gerichtet ist, dann wird die erste, der Rufnummer 100 zugeordneten Adresse - im Ausführungsbeispiel ist dies die erste Adresse 140 - betrachtet und es wird geprüft, ob das dieser Adresse zugeordnete Endgerät betriebsbereit ist. Das erste Endgerät 40 ist im Ausführungsbeispiel als ein drahtgebundenes Terminal, ausgeführt, für welches vorausgesetzt werden soll, daß es betriebsbereit ist. Der eingegangene Ruf wird somit dem ersten Endgerät 40 zugeleitet und führt zu einer Signalisierung durch eine vorgegebene erste Anzahl von Signalisierungsintervallen am ersten Endgerät 40. Ist der Benutzer am ersten Endgerät 40 nicht erreichbar, so wird nach der vorgegebenen ersten Anzahl von Signalisierungsintervallen der nachfolgende Eintrag von Adressen in der Adressenzuordnungstabelle 11 betrachtet, der der gerufenen Rufnummer 100 zugeordnet ist. Dies ist im Ausführungsbeispiel die zweite Adresse 141. Das der zweiten Adresse 141 zugeordnete zweite Endgerät 41 ist im Ausführungsbeispiel ein mobiles Endgerät. Es wird geprüft, ob es an einer Basisstation eingeloggt ist. Im Ausführungsbeispiel ist das zweite Endgerät 41 bei der ersten Basisstation 30 eingeloggt. In der Zentrale 10 liegt somit die Information vor, daß das zweite Telekommunikationsendgerät 41 betriebsbereit ist und daß es an der ersten Basisstation 30 eingeloggt ist. Der für die Rufnummer 100 eingegangene Ruf wird daher - nämlich weil die Adresse, die in der Adressenzuordnungstabelle 11 der Rufnummer 100 an zweiter Stelle zugeordnet ist, zum zweiten Telekommunikationsendgerät 41 gehört - zunächst dem zweiten Endgerät 41 zugeleitet, das beispielsweise durch akustische Signalisierung, dem Benutzer mitteilt, daß für ihn ein Ruf vorliegt. Reagiert der Benutzer nach einer vorgegebenen zweiten Anzahl von Signalisierungsintervallen am zweiten Endgerät 41 nicht auf den eingehenden Ruf, so wird unter den der Rufnummer 100 in der Adressenzuordnungstabelle 11 zugeordneten Adressen die Nachfolgende betrachtet, im Beispiel ist es die dritte Adresse 142, die das dritte Endgerät 42 adressiert. Die Behandlung des eingehenden Ruf es am dritten Endgerät 42 kann in analoger Weise zu der Behandlung des eingehenden Ruf es am ersten bzw. am zweiten Endgerät 40, 41 zu einer dritten Anzahl von Signalisierungsintervallen führen. Alternativ dazu kann am dritten Endgerät 42 auch, beispielsweise als letzte Anlaufstation für die Behandlung des eingehenden Rufes für die Rufnummer 100, eine Anrufbeantworterfunktion eingerichtet sein, so daß der eingehende Ruf in jedem Fall bedient werden kann.

Im folgenden werden Abwandlungen der Behandlung eines eingehenden Rufes beschrieben, die sich durch die dynamische Zuordnung von Adressen zu Rufnummern in der Andressenzuordnungstabelle 11 ergeben. Für den Fall, daß beispielsweise im soeben beschriebenen Ausführungsbeispiel das zweite Endgerät 41 nicht betriebsbereit ist, wird der eingehende Ruf an die Rufnummer 100 solchermaßen behandelt, daß der Ruf sogleich an das dem dritten Eintrag in der Adressenzuordnungstabelle 11 zugeordnete Endgerät - im Ausführungsbeispiel ist es das dritte Endgerät 42 - zugeleitet wird. Daraufhin verläuft die Behandlung des eingehenden Rufes analog zu der vorher beschriebenen Behandlung. Der Benutzer, dem das erste Endgerät 40 und das zweite Endgerät 41 zugeordnet ist, muß sich somit nicht darum kümmern, ob jeweils eine Rufweiterleitung bzw. Rufumleitung zu seinem mobilen Endgerät 41 eingerichtet ist oder nicht. Die Zuleitung des für den Benutzer eingehenden Rufes an das mobile Endgerät, im Beispiel ist es das zweite Endgerät 41, erfolgt somit automatisch wenn im Telekommunikationssystem 6 und insbesondere in der Zentrale 10 die Information vorliegt, daß das mobile Endgerät betriebsbereit ist. Diese Information wird beispielsweise von den Basisstationen 30, 31, bei denen das mobile Endgerät eingeloggt ist, an die Zentrale 10 weitergeleitet. Eine Möglichkeit hierfür ist beispielsweise die Übersendung einer regelmäßig aktualisierten Tabelle von aktuell bei einer Basisstation eingeloggten mobilen Endgeräten an die Zentrale 10. Wenn solche Tabellen in der Zentrale 10 jederzeit oder regelmäßig in kurzen Zeitabständen aktualisiert für jede Basisstation des erfindungsgemäßen Kommunikationsnetzes 6 vorliegen, so hat die Zentrale 10 die Information, welches mobile Endgerät an welcher Basisstation eingeloggt ist, für die Betriebsbereitschaft der einzelnen Geräte ständig vorliegen.

Die dynamische Zuordnung von Adressen zu Rufnummern in der Zentrale 10 bzw. in der Adressenzuordnungstabelle 11 wird durch die Verknüpfung von statischen Vorgaben des Benutzers und den dynamischen Informationen über die Betriebsbereitschaft von Endgeräten erreicht. Einem Benutzer sind dabei Gruppen von Endgeräten zugeordnet, über die er erreichbar ist. Der Benutzer hat beispielsweise ein ihm zugeordnetes drahtgebundenes Terminal sowie ein mobiles Endgerät, an denen er für ihn eingehende Rufe entgegennehmen kann. Weiterhin ist beispielsweise vorgesehen, daß bei seiner Abwesenheit für ihn eingehende Rufe an einen zentralen Anrufbeantworter, ein zentrales Sekretariat o.ä. weitergeleitet werden sollen. Im Ausführungsbeispiel entspricht das erste, das zweite und das dritte Endgerät 40 - 42 einer Gruppe von Endgeräten, die der Rufnummer 100 des Benutzers zugeordnet sind. In der Adressenzuordnungstabelle 11 werden nun die dem ersten, zweiten und dritten Endgerät 40 - 42 entsprechenden ersten, zweiten und dritten Adressen 140 bis 142 der Rufnummer 100 zugeordnet. Zusätzlich werden in der Adressenzuordnungstabelle 11 statisch von dem Benutzer vorgegebene Informationen über die Reihenfolge, - d.h. die Priorität der Adressen bzw. der Endgeräte bei der Behandlung eines eingehenden Rufes - und über die Anzahl der Signalisierungsintervalle, die an den einzelnen Endgeräten auszuführen sind. Diese vom Benutzer statisch vorgegebenen Informationen werden bei einem eingehenden Ruf mit den dynamischen Informationen über die Betriebsbereitschaft von Endgeräten und hier insbesondere von mobilen Endgeräten verknüpft, so daß Endgeräte, von denen die Information vorliegt, daß sie nicht betriebsbereit sind, aus der Adressenzuordnungstabelle gestrichen werden. Eingehende Rufe können solchen Endgeräten dann nicht zugeleitet werden. Wenn einem Benutzer beispielsweise ein drahtgebundenes Terminal und ein mobiles Terminal zugeordnet sind, dann kann er beispielsweise alternativ vorsehen, daß
- ein eingehender Ruf zunächst dem drahtgebundenen Terminal und dann dem mobilen Terminal
- ein eingehender Ruf zunächst dem mobilen Terminal und darin dem drahtgebundenen Terminal
- ein eingehender Ruf zunächst dem drahtgebundenen Terminal, anschließend dem mobilen Terminal und schließlich dem drahtgebundenen Terminal zugeleitet werden soll.
Selbstverständlich sind sämtliche Kombinationen Abfolgen der Zuleitung eines eingehenden Rufes möglich.

Die Information über die Reihenfolge der Endgeräte bei der Behandlung eines eingehenden Rufes wird in der Adressenzuordnungstabelle beispielsweise so abgelegt, daß bei der Zuordnung der Adressen 140,... zu den Rufnummern 100, 101 die Reihenfolge beachtet wird, d.h. die Adresse des zuerst zu adressierenden Endgerätes steht an erster Stelle in der Adressenzuordnungstabelle 11, die Adresse des als nächstes zu adressierenden Endgerätes steht an nächster Stelle in der Adressenzuordnungtabelle 11 und so fort.

Die bisher erfolgte Beschreibung ging davon aus, daß eine Rufnummer genau einem Benutzer zugeordnet ist. Dies ist nicht zwingend notwendig. Beispielsweise kann eine Rufnummer auch einem Team von Personen zugeordnet sein, so daß der Rufnummer 100 in der Adressenzuordnungstabelle 11 sämtliche Adressen von solchen Endgeräten zugeordnet werden, an denen Mitglieder des Teams erreichbar sind. Die Gruppe von Endgeräten bezieht sich somit auf eine Mehrzahl von Endgeräten, darunter insbesondere eine Mehrzahl von drahtgebundenen Endgeräten und eine Mehrzahl von mobilen Endgeräten. Eingehende Rufe für das Team von Personen werden nun anhand der der entsprechenden Rufnummer zugeordneten Einträge von Adressen in der Adressenzuordnungstabelle 11 den jeweiligen Endgeräten zugeleitet. Hierbei ist wiederum die Definition der Endgeräte, die der dem Team von Personen zugeordneten Gruppe von Endgeräten entsprechen statisch festgelegt und die Zuordnung der Rufnummer 100 zu den Andressen der Gruppe von Endgeräten wird durch die Verknüpfung dieser statischen Informationen mit den dynamischen Informationen über die Betriebsbereitschaft von Endgeräten dynamisiert.

## Patentansprüche

1. Verfahren zur Behandlung eines bei einem Kommunikationsnetz (6), insbesondere bei einem Kommunikationsnetz ohne besondere Netzstruktur, eingehenden Rufes, wobei in das Kommunikationsnetz (6) Endgeräte (40 - 47) integriert sind, wobei jedem Endgerät (40 - 47) eine Adresse (140,...) entspricht, wobei der eingehende Ruf an eine Rufnummer (100) gerichtet ist, wobei der Rufnummer (100) eine Gruppe der Endgeräte (40 - 42) zugeordnet ist, mit folgenden Schritten:
- der Rufnummer (100) wird die Adresse (140) eines ersten Endgerätes (40) aus der Gruppe (40 - 42) von Endgeräten zugeordnet,
- in Abhängigkeit der Betriebsbereitschaft eines zweiten Endgerätes (41) aus der Gruppe (40 - 42) von Endgeräten wird der Rufnummer (100) zusätzlich die Adresse (141) des zweiten Endgerätes (41) dynamisch zugeordnet,
- der eingehende Ruf wird nach einer vorgegebenen Abfolge und in Abhängigkeit der Zuordnung den der Rufnummer (100) zugeordneten Adressen (140 - 142) zugeführt.

2. Verfahren nach Anspruch 1, dadurch gekennzeichnet, daß die Abfolge vorsieht, daß der eingehende Ruf mittels den der Gruppe von Endgeräten (40 - 42) zugeordneten Adressen (140 - 142) alternativ folgendermaßen behandelt wird:
- durch eine Signalisierung zunächst am ersten Endgerät (40) und anschließend am zweiten Endgerät (41),
- durch eine Signalisierung zunächst am zweiten Endgerät (41) und anschließend am ersten Endgerät (40),
- durch eine Signalisierung zunächst am ersten Endgerät (40), anschließend am zweiten Endgerät (41) und schließlich wieder am ersten Endgerät (40).

3. Verfahren nach Anspruch 1 oder 2, dadurch gekennzeichnet, daß das zweite Endgerät (41) ein mobiles Endgerät ist, daß das Kommunikationsnetz (6) wenigstens eine Basisstation (30, 31) zum Betrieb von mobilen Endgeräten umfaßt und daß die Betriebsbereitschaft des mobilen Endgerätes (41) dann gegeben ist, wenn das mobile Endgerät (41) bei einer Basisstation (30, 31) des Kommunikationsnetzes (6) eingeloggt wird.

4. Verfahren nach einem der Ansprüche 2 oder 3, dadurch gekennzeichnet, daß der Rufnummer (100) die Adresse eines dritten Endgerätes (42) aus der Gruppe (40 - 42) von Endgeräten zusätzlich zugeordnet wird und daß die Signalisierung zunächst am ersten Endgerät (40), anschließend am zweiten Endgerät (41) und schließlich am dritten Endgerät (42) durchgeführt wird.

5. Zentrale (10) für ein Kommunikationsnetz (6), wobei in das Kommunikationsnetz (6) Endgeräte (40 - 47) integriert sind, wobei jedem Endgerät (40 - 47) eine Adresse (140,...) entspricht, wobei ein eingehender Ruf an eine Rufnummer (100) gerichtet ist, wobei der Rufnummer (100) eine Gruppe (40 - 42) der Endgeräte zugeordnet ist, wobei mittels einer Adressenzuordnungstabelle (11), insbesondere in der Zentrale (10), der Rufnummer (100)
- die Adresse (140) eines ersten Endgerätes (40) aus der Gruppe (40 - 42) von Endgeräten und,
- in Abhängigkeit der Betriebsbereitschaft eines zweiten Endgerätes (41) aus der Gruppe (40 - 42) von Endgeräten zusätzlich die Adresse (141) des zweiten Endgerätes (41) dynamisch zugeordnet ist.

6. Zentrale nach Anspruch 5, dadurch gekennzeichnet, daß das zweite Endgerät (41) ein mobiles Endgerät ist, daß das Kommunikationsnetz (6) wenigstens eine Basisstation (30, 31) zum Betrieb von mobilen Endgeräten umfaßt und daß die Zentrale (10) Mittel umfaßt, die Betriebsbereitschaft des mobilen Endgerätes (41), insbesondere durch Einloggen des mobilen Endgerätes (41) bei einer Basisstation (30, 31), zu erkennen und die Adresse (141) des mobilen Endgerätes (41) der Rufnummer (100) in der Adressenzuordnungstabelle (11) zuzuordnen.

7. Zentrale (10) nach Anspruch 5 oder 6, dadurch gekennzeichnet, daß mittels der Adressenzuordnungstabelle (11) der Rufnummer (100) die Adresse (142) eines dritten Endgerätes (42) aus der Gruppe (40 - 42) von Endgeräten zusätzlich zugeordnet ist.
